# EUROPÄISCHE PATENTSCHRIFT

(11) **EP 1 287 896 B1**
(45) Veröffentlichungstag und Bekanntmachung des Hinweises auf die Patenterteilung: **21.05.2008**
(21) Anmeldenummer: 02017269.8
(22) Anmeldetag: 01.08.2002
(51) Int. Cl.: B04C 3/04

(54) **Vielzellenzyklon und Verfahren zu dessen Herstellung**
Cyclone air cleaner assembly and method for manufacturing it
Separateur cyclonique et procédé de réalisation

(30) Priorität: 31.08.2001 DE 10142701
(43) Veröffentlichungstag der Anmeldung: 05.03.2003
(73) Patentinhaber: Mann + Hummel GmbH, 71638 Ludwigsburg (DE)
(72) Erfinder: Kopec, Edvard, 67346 Speyer (DE); Greif, Volker, Dr., 67376 Harthausen (DE); Hähn, Jens, 69120 Heidelberg (DE); Hartmann, Marion, 68766 Hockenheim (DE); Dworatzek, Klemens, 68535 Edingen (DE)
(74) Vertreter: Voth, Gerhard

(56) Entgegenhaltungen:
- EP-A- 0 256 491
- GB-A- 1 278 488
- US-A- 3 915 679
- US-A- 4 242 115
- US-A- 4 746 340

## Beschreibung

### Stand der Technik

Die Erfindung betrifft einen Vielzellenzyklon mit einer Vielzahl von parallel geschalteten Zyklonzellen nach der Gattung des Patentanspruchs 1. Außerdem betrifft die Erfindung ein Verfahren zur Herstellung einer Gruppe der genannten Zyklonzellen nach der Gattung des Patentanspruchs 8.

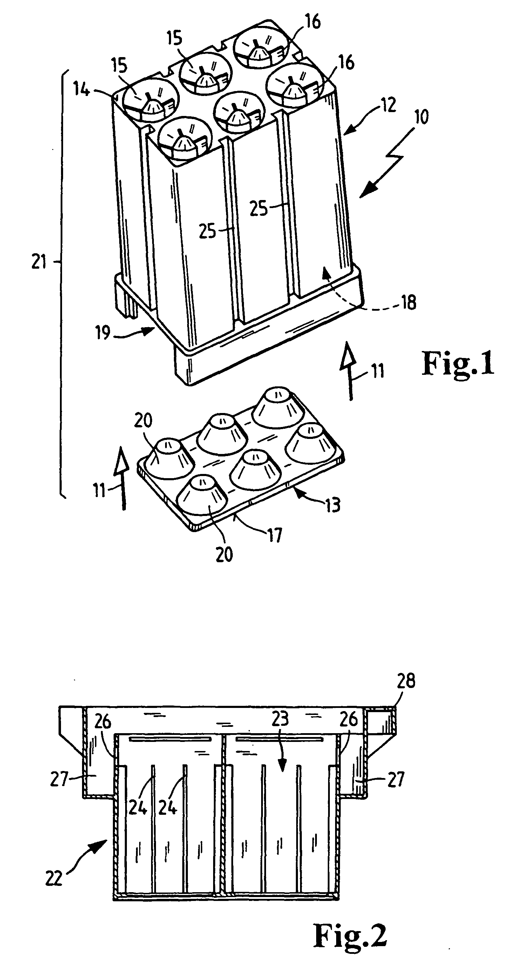

Derartige Vielzellenzyklone sind beispielsweise aus der DE 298 19 335 U1 bekannt. Entsprechend dieses Dokumentes kommen die genannten Vielzellenzyklone beispielsweise zur Vorabscheidung von Partikeln in Luftfiltern zum Einsatz. Figur 1 des oben genannten Dokumentes zeigt einen modularen Aufbau des Vielzellenzyklons, wobei die Zyklonzellen 20 zwischen Lochblechen 19 eingebunden sind, wodurch zwischen diesen Lochblechen ein Schmutzsammelraum für die abgeschiedenen Teilchen entsteht, welcher sich durch einen Schmutzaustrag 26 entleeren lässt. Die Zyklonzellen 20 sind Standardbauteile und daher auf Grund der hohen Fertigungszahlen kostengünstig in der Herstellung. Durch die Zusammenfassung der Zyklonzellen lässt sich daher kostengünstig ein Zyklonabscheider realisieren, welcher im Verhältnis zum möglichen Volumendurchsatz ein geringes Bauvolumen beansprucht. Allerdings lassen sich nicht ohne weiteres unbegrenzt viele Zyklonzellen zu einem Vielzellenzyklon zusammenschließen. Je mehr Zyklonzellen vorgesehen sind, desto größer wird das Problem, die abgeschiedenen Substanzen durch den Schmutzaustrag 26 zu entfernen. Dies kann während des Betriebs zu Verstopfungen in einzelnen Zyklonzellen führen, wodurch das Abscheideergebnis des Vielzellenzyklons sowie der durch ihn bewirkte Druckverlust nachteilhaft beeinflusst wird. Die Reinigung großer Arrays von Zyklonzellen muss daher über mehrere Schmutzausträge erfolgen, wodurch ein zusätzlicher konstruktiver Aufwand entsteht und die Wirtschaftlichkeit des derart ausgestatteten Vielzellenzyklons leidet.

Das Dokument US 4,242,115 offenbart einen Vielzellenzyklon mit einzelnen Zyklonzellen. Die Zyklonzellen sind in mehreren parallelen Reihen angeordnet. Zwischen den Zyklonzellen sind Kanalstrukturen gebildet, durch welche der in den Zyklonzellen abgeschiedene Schmutz zu einem Schmutzaustrag befördert wird. Da die Zyklonzellen zueinander gleichgroße Abstände aufweisen kann es zu Verstopfungen einzelner Zyklonzellen beim Schmutzabtransport kommen, wodurch die Abscheidergebnisse und die Standzeiten beeinträchtigt werden.

Aufgabe der Erfindung ist es daher, einen Vielzellenzyklon zu schaffen, welcher bei vertretbarem Aufwand an Kosten optimale Abscheideergebnisse und Standzeiten erzielt. Diese Aufgabe wird durch die Merkmale der Ansprüche 1 sowie 8 gelöst.

### Vorteile der Erfindung

Der erfindungsgemäße Vielzellenzyklon ist in bekannter Weise aus einzelnen Zyklonzellen aufgebaut, welche eine gemeinschaftliche Ansaugseite für das zu reinigende Fluid und eine Ausblasseite für das gereinigte Fluid aufweisen. Weiterhin ist ein Schmutzaustrag vorgesehen, aus dem die abgeschiedenen Substanzen abgesaugt werden können. Hierzu wird normalerweise ein Unterdruck angelegt, so dass ein Teilstrom des zu reinigenden Fluids zusammen mit den abgeschiedenen Substanzen abgesaugt wird. Zum Zwecke der Absaugung befinden sich die Zyklonzellen in einem Gehäuse, in das der äußere radiale Bereich der Zyklonzellen mündet, in dem sich jeweils die abgeschiedenen Substanzen anreichern. Der reinseitige Ausgang der Zyklonzellen wird durch ein Mittelrohr gebildet, welches in die Zyklonzellen eintaucht und damit den radial inneren Volumenstrom des zu filternden Fluids aufnimmt. Vielzellenzyklone können sowohl zur Abscheidung von Substanzen aus Flüssigkeiten wie auch aus Gasen Verwendung finden. Eine Anwendung finden Vielzellenzyklone als Vorabscheider in Luftfiltern für Verbrennungskraftmaschinen.

Gekennzeichnet ist die Erfindung dadurch, dass die Zyklonzellen gruppenweise im Gehäuse angeordnet sind. Die einzelnen Gruppen sind derart angeordnet, dass Kanalstrukturen gebildet werden, die den Transport der abgeschiedenen Substanzen hin zum Schmutzaustrag begünstigen. Dabei werden die Kanalstrukturen dadurch gebildet, dass sich im Verhältnis zum Abstand der Zyklonzellen einer Gruppe untereinander eine Volumenaufweitung ergibt, die den Querschnitt zur Durchleitung der abgeschiedenen Substanzen zur Verfügung stellt. Hierdurch kann bei gegebener Absaugleistung eine gleichmäßige Absaugung der gesamten Zyklonzellen erfolgen. Somit werden also auch Zyklonzellen abgesaugt, die eine größere Entfernung zum Schmutzaustrag haben. Einer Verstopfung wird auf diese Weise wirksam entgegengewirkt, wodurch sich bei geringem Bauaufwand eine große Anzahl von Zyklonzellen zu einem Vielzellenzyklon zusammenfassen lässt.

Die einzelnen Gruppen von Zyklonzellen sind dadurch definiert, dass diese durch die Kanalstrukturen vollständig getrennt sind. Gemäß einer besonderen Ausgestaltung sind die Zyklonzellen innerhalb der Gruppen sogar derart angeordnet, dass jeweils benachbarte Zyklonzellen aneinander stoßen. Dadurch lassen sich geschlossene Kanalstrukturen bilden, wobei die Wände der Zyklonzellen dabei Teile der Wandungen der Kanalstruktur bilden. Die Kanalstrukturen werden weiterhin durch das Gehäuse gebildet, welches den Raum zum Absaugen der abgeschiedenen Substanzen nach außen hin begrenzt.

Eine andere Ausgestaltung der Erfindung sieht vor, dass die Gruppen von Zyklonzellen in einzelnen Modulen zusammengefasst sind. Diese Module weisen Modulgehäuse auf, welche selbst kleine Sammelräume für die abgeschiedenen Substanzen bilden. Diese Sammelräume sind mit Öffnungen versehen, die in die Kanalstrukturen im Gehäuse münden. Auf diese Weise ist der Vielzellenzyklon gleichsam aus mehreren kleinsten Vielzellenzyklonen in Form der Module gebildet. Die Module haben vorteilhafterweise 4 bis 10 Zellen, da bei dieser Anzahl von Zyklonzellen eine Absaugung mittels eines gemeinschaftlichen Sammelraums noch völlig unproblematisch verläuft. Die Öffnungen der Module münden jedoch in die bereits beschriebenen Kanalstrukturen, so dass alle Module durch den Schmutzaustrag in gleicher Weise abgesaugt werden können. Einem Verstopfen einzelner Module wird daher entsprechend der bereits beschriebenen Weise wirksam entgegengewirkt.

Eine besondere Ausgestaltung der Erfindung sieht vor, dass die besagten Module selbst Einheiten bilden, die einzeln in das Gehäuse zum Absaugen einsetzbar sind. Auf diese Weise lässt sich ein Baukastensystem verwirklichen, wobei die Module kostengünstig hergestellt werden können und in unterschiedlichen Gehäuse zu Vielzellenzyklonen mit verschiedener Anzahl von Zyklonzellen zusammengesetzt werden können. Daher trägt die Variante mit einzelnen Modulen in besonderer Weise zur Wirtschaftlichkeit des erfindungsgemäßen Vielzellenzyklons bei.

Gemäß einer vorteilhaften Ausgestaltung sind die Gruppen von Zyklonzellen, welche auch durch die bereits beschriebenen Module gebildet sein können, regelmäßig angeordnet. Hiermit ist insbesondere eine zentral- oder achsensymmetrische Anordnung zueinander gemeint. Durch die symmetrische Anordnung wird bewirkt, dass geordnete Strömungsverhältnisse im Gehäuse hergestellt werden können. Damit wird das Abreinigungsergebnis durch den Schmutzaustrag besser vorhersagbar und die Zuverlässigkeit des Vielzellenzyklons verbessert.

Eine besonders vorteilhafte Ausgestaltung der Erfindung sieht vor, dass die Kanalstrukturen einen Ringkanal umfassen, der alle Gruppen von Zyklonzellen umringt. Über diesen Ringkanal kann auf einfache Weise das abgeschiedene Substrat über den Schmutzaustrag abgesaugt werden. Insbesondere bei der Verwendung von Modulen ist eine Anordnung möglich, bei der die Öffnungen der Module nach außen in den Ringkanal münden.

Dadurch entstehen kurze und direkte Absaugwege für die abgeschiedenen Substanzen. In diesem Fall ist also außer dem Ringkanal nicht die Bildung weiterer Kanalstrukturen notwendig. Selbstverständlich kann der Ringkanal aber auch mit Kanalstrukturen verbunden werden, die in das Innere des Vielzellenzyklons hineinreichen und auf diese Weise die einzelnen Zyklonzellen in Gruppen aufteilen.

Das Abscheideergebnis der erfindungsgemäßen Vielzellenzyklone kann noch verbessert werden, indem einzelne Zyklonzellen durch sogenannte Blindrohre ersetzt werden. Diese schaffen eine direkte Verbindung zwischen Ansaugung und den Kanalstrukturen, so dass die Einleitung von Fluid in das Gehäuse unter einem geringeren Druckverlust möglich wird, als dies durch Verwendung einer entsprechenden Zyklonzelle möglich wäre. Daher können Blindrohre vorteilhafterweise in Bereiche des Vielzellenzyklons eingesetzt werden, die trotz Bildung von Kanalstrukturen problematischer hinsichtlich der Abreinigung sind als der restliche Vielzellenzyklon. Durch Ausbildung als Blindrohr, welches an Stelle einer Zyklonzelle eingesetzt werden kann, kann nach abgeschlossener Konstruktion des Vielzellenzyklons eine Optimierung des Abscheideergebnisses erreicht werden, ohne die Konstruktion wesentlich zu verändern. Daher stellt die Verwendung von Blindrohren eine kostengünstige Alternative dar, beispielsweise Vielzellenzyklone, die als Einzelanfertigung hergestellt werden, mittels Versuchen oder bei bereits erfolgtem Einsatz zu optimieren.

Ein weiteren Aspekt der Erfindung ist ein Verfahren zur Herstellung von Gruppen von Zyklonen wie es zum Beispiel die EP 0 256 491 beschreibt.

Ein Verfahren zur Herstellung der erfindungsgemäßen Gruppen von Zyklonzellen sieht vor, dass zumindest ein Teil der Bauelemente, die für die Zyklonzellen notwendig sind, in ein Bauteil integriert werden. Dieses kann insbesondere urformtechnisch z. B. durch Spritzgießen hergestellt werden. Dabei werden alle gleichartigen Bauelemente einer Gruppe in einem Verfahrensschritt hergestellt, so dass die gesamte Gruppe aus Zyklonzellen pro Bauelement nur aus einem Bauteil besteht. Diese Lösung ist besonders wirtschaftlich, da ein großer Teil des Montageaufwandes eingespart werden kann.

Gemäß einer sinnvollen Ausgestaltung der Erfindung wird eine Gruppe von Zyklonzellen durch einen Grundkörper und einen Zusatzkörper gebildet. Dabei enthält der Grundkörper die röhrenförmige Struktur der Zyklonzellen, die für die Durchleitung des zu reinigenden Fluids vorgesehen ist. Dieser Grundkörper verläuft also von der Ansaugung bis zu der Stelle, wo die abgeschiedenen Substanzen ausgetragen werden sollen. Das Zusatzteil beinhaltet die Auslassseite für das gereinigte Fluid, welches durch Mittelrohre gebildet wird. Diese tauchen in den Grundkörper derart ein, dass in der rohrartigen Struktur ein radial äußerer Bereich entsteht, der für die Trennung des gereinigten Fluids vom abgeschiedenen Substrat verantwortlich ist.

Gemäß einer weiteren Ausgestaltung der Erfindung können auch die Leitschaufeln in den Grundkörper integriert werden. Diese sind zu diesem Zweck hinterschneidungsfrei bezüglich der Durchströmungsrichtung des Grundkörpers gestaltet. Die Durchströmungsrichtung entspricht nämlich auf Grund der rohrartigen Struktur, die im Grundkörper integriert ist, genau der Entformungsrichtung bei einer gusstechnischen Herstellung des Grundkörpers. Daher sind auch bei Integration der Leitschaufeln nur zwei Formteile zur Herstellung des Grundkörpers notwendig.

Gemäß einer besonderen Ausgestaltung der Erfindung bildet das nach genanntem Verfahren hergestellte Bauteil ein Modul entsprechend der bereits beschriebenen Struktur. Dies bedeutet, dass der Grundkörper zusammen mit dem Zusatzkörper ein Modulgehäuse bilden muss, welches den Sammelraum für das im Modul abgeschiedene Substrat enthält. Dieses Modulgehäuse lässt sich auf einfache Weise durch Zusammensetzen von Grundkörper und Zusatzkörper bilden, wobei die Öffnung bevorzugt in der Trennfuge zwischen Grundkörper und Zusatzkörper vorgesehen werden kann. Hierdurch entsteht ein kostengünstig zu fertigendes Modul, welches wie bereits erwähnt zur Bildung eines Baukastensystems beitragen kann.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: ein Modul für einen bekannten Vielzellenzyklon, bestehend aus Grundkörper und Zusatzkörper in perspektivischer Ansicht,
- Figur 2: ein Gehäuse, in das bekannte Module gemäß Figur 1 einsetzbar sind, im Mittelschnitt,
- Figur 3: eine Aufsicht auf das Gehäuse gemäß Figur 2 im verschlossenen Zustand,
- Figur 4: das Gehäuse in der Darstellung entsprechend Figur 2 mit eingebauten bekannten Modulen gemäß Figur 1,
- Figur 5: die Integration eines bekannten Gehäuses gemäß Figur 3 an einen zylindrischen Luftfilter in perspektivischer Ansicht und
- Figur 6: eine erfindungsgemäße Ausgestaltung eines Vielzellenzyklons in kreisförmiger Gestalt als Aufsicht.

### Beschreibung der Ausführungsbeispiele

In Figur 1 ist ein Modul 10 vor dem Zusammenbau entsprechend der angedeuteten Pfeile 11 dargestellt. Dies besteht aus einem Grundkörper 12 und einem Zusatzkörper 13. Der Grundkörper bildet eine Ansaugung 14, die durch die rohseitige Mündung von Zyklonzellen 15 gebildet ist. In diesen Mündungen sind Leitschaufeln 16 zu erkennen, welche einteilig, hinterschneidungsfrei mit dem Grundkörper 12 ausgebildet sind. Daher lässt sich das gezeigte Teil durch zwei Formhälften in Spritzgusstechnik herstellen, indem diese in Richtung der Pfeile 11 zusammen- und nach dem Spritzgießvorgang wieder auseinandergeführt werden. Selbiges gilt auch für das Zusatzteil 13.

Das Zusatzteil 13 bildet eine Auslassseite 17, welche gleichzeitig als Deckel zum Abschluss eines durch den Grundkörper gebildeten, in Figur 1 nicht erkennbaren Sammelraums 18 vorgesehen ist. In der dadurch entstehenden Trennfuge ist eine Öffnung 19 gebildet, die einen Austrag des im Sammelraum 18 befindlichen abgeschiedenen Substrats erlaubt. Das Substrat gelangt aus den Zyklonzellen 15 durch einen Ringspalt, der dadurch gebildet wird, dass die in der Darstellung gemäß Figur 1 nach oben zeigenden Mittelrohre 20 in die Zyklonzellen eintauchen. Das Innere der Mittelrohre bildet Löcher in der Auslassseite 17, die einem Transport des gereinigten Fluides dienen. Insgesamt bilden die Außenseiten des Grundkörpers 12 und des Zusatzkörpers 13 ein Modulgehäuse 21.

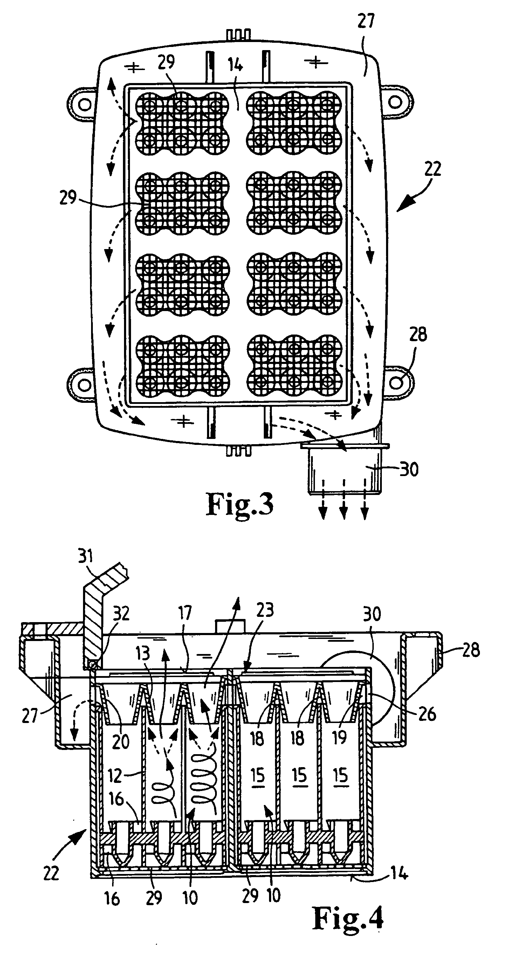

Figur 2 zeigt ein Gehäuse 22, welches zum Zwecke der Integration von Modulen gemäß Figur 1 Aufnahmen 23 aufweist. Hierzu sind im Gehäuse Rippen 24 ausgebildet, die mit entsprechenden Schlitzen 25 (s. Figur 1) der Module korrespondieren. Die Aufnahmen sind weiterhin mit einem Durchbruch 26 versehen, der mit den Öffnungen 19 der Module dahingehend korrespondiert, dass diese in einen Ringkanal 27 münden, der alle Module umgibt. Zur Aufnahme eines nicht dargestellten Gehäusedeckels ist eine Flanschverbindung 28 vorgesehen. Das Gehäuse in der selben Darstellung mit bereits eingebauten Modulen 10 ist in Figur 4 dargestellt.

Figur 3 und 4 zeigen das Gehäuse 22 mit eingebauten Modulen 10. In Figur 3 ist eine Aufsicht auf das Gehäuse 22 mit der Ansaugung 14 zu sehen. Es wird deutlich, dass vor dem Einbau der Module 10 Schutzgitter 29 in die Aufnahmen eingelegt werden. Weiterhin lässt sich der Ringkanal 27 erkennen, der die acht verwendeten Module umgibt und in einem Schmutzaustrag 30 endet.

Die Schutzgitter sollen verhindern, dass grobe Teilchen von den Zyklonzellen angesaugt werden, welche die Leitschaufeln 16 zusetzen und so die Funktion des Vielzellenzyklons auf Dauer beeinträchtigen würden. Das Zusammenwirken dieser Bauteile lässt sich am besten Figur 4 entnehmen. Die Gitter 29 liegen auf dem offenen Boden der Aufnahmen 23 für die Module 10 auf. Anschließend werden die Module in die Aufnahmen eingesetzt. Weiterhin sind die Sammelräume 18 zu erkennen, welche durch die Mittelrohre 20 gebildet werden. Nach dem Einsetzen der Module 10 in das Gehäuse 22 wird ein Deckel 31 aufgesetzt, der den Ringkanal 27 von der Auslassseite 17 mittels einer Dichtung 32 trennt.

Der Weg des zu reinigenden bzw. des gereinigten Fluids ist durch durchgezogene Pfeile in Figur 4 angedeutet. Dieses gelangt durch die Ansaugung in die Zyklonzellen 15 und von dort durch die Mittelrohre 20 und die Auslassseite 17 in das Innere des Deckels 31. Durch den Drall in den Zyklonrohren wird ein mit den abzuscheidenden Substanzen angereicherter Nebenstrom abgeschieden, der durch gestrichelte Pfeile in Figur 3 und 4 dargestellt ist. Der Figur 4 ist zu entnehmen, dass dieser Nebenstrom am äußeren Rand der Mittelrohre 20 in den Sammelraum 18 und von dort durch die Öffnungen 19 und Durchbrüche 26 in den Ringkanal 27 gelangt. Wie Figur 3 zu entnehmen ist, sorgt der Ringkanal für eine gleichmäßige Absaugung der abgeschiedenen Substanzen ausgehend von den Durchbrüchen 26 hin zum Schutzaustrag 30.

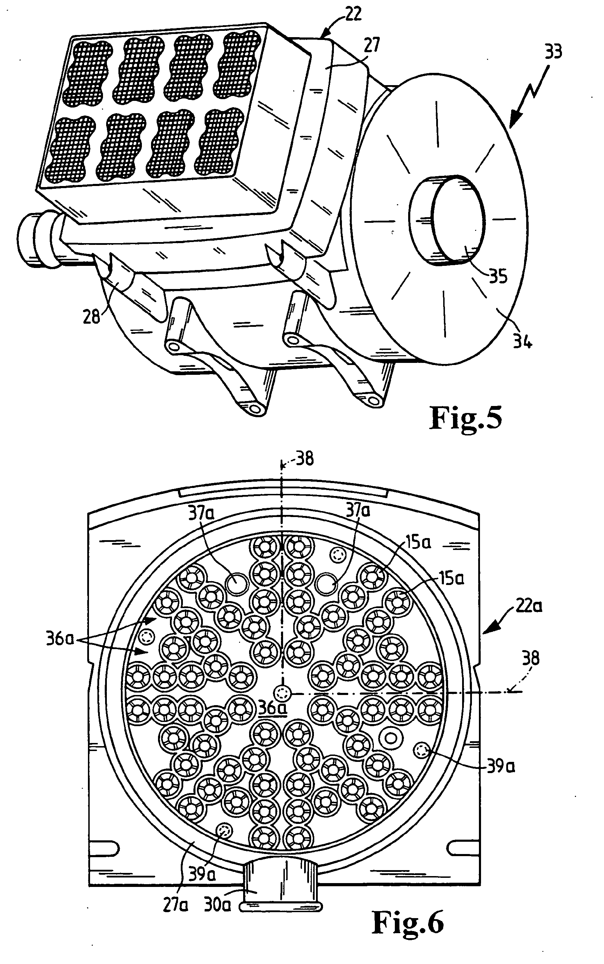

Der Figur 5 ist ein Anwendungsbeispiel des Vielzellenzyklons gemäß Figur 3 und 4 zu entnehmen, bei dem dieser als Vorfilter für einen Luftfilter zum Einsatz kommt. Zu diesem Zweck ist der Vielzellenzyklon mit dem Gehäuse 22 an ein Luftfiltergehäuse 34 angeflanscht, wobei dem Luftfiltergehäuse dabei die Funktion des Deckels 31 gemäß Figur 4 zukommt. Dadurch wird das vorgereinigte Fluid, in diesem Fall Luft, direkt an das im Luftfiltergehäuse 34 eingebaute Filterelement weitergeleitet, durchtritt dieses und gelangt so zu einem Auslass 35 für die gereinigte Luft.

In Figur 6 ist eine Aufsicht auf einen erfindungsgemäßen Vielzellenzyklon dargestellt, die in ihrer Perspektive der Figur 3 ähnelt, allerdings ist eine zentralsymmetrische Konfiguration der Zyklonzellen dargestellt. Das Gehäuse 22a ist zwar gedeckelt dargestellt, allerdings lässt die Konfiguration der Zyklonzellen 15a einen Rückschluss auf die Ausbildung von Kanalstrukturen 36a zu, die insbesondere einen kreisförmig ausgebildeten Ringkanal 27a enthalten, der in den Schmutzaustrag 30a mündet. Die Zyklonzellen 15a der jeweiligen Gruppen stehen so dicht beieinander, dass sich die Wände der jeweils benachbarten Zyklonzellen berühren. Daher sind die Kanalstrukturen 36a als geschlossene Strukturen ausgebildet, wodurch eine direkte Ausleitung der abgeschiedenen Substanzen möglich wird. Hierzu sind insbesondere die in Figur 6 nicht zu erkennenden Schmutzauslässe der einzelnen Zyklonzellen zu den Kanalstrukturen 36a hin ausgerichtet.

Im oberen Bereich des Vielzellenzyklons, der am weitesten vom Schmutzaustrag 30a entfernt ist, kommen zwei Blindrohre 37a zum Einsatz, die jeweils eine Zyklonzelle ersetzen. Hierdurch wird in diesem Bereich zusätzliche Luft in die Kanalstrukturen 36a eingeleitet, die den Abtransport der abgeschiedenen Substanzen unterstützen. Gleichzeitig sind die beiden Zyklonzellen, welche am stärksten verstopfungsgefährdet werden, durch die Blindrohre ausgetauscht. Hier hätte nämlich entgegen der Schwerkraft ein Abtransport der Substanzen erfolgen müssen, da der Vielzellenzyklon in der dargestellten Weise mit Schmutzaustrag 30a nach unten eingebaut wird.

Der dargestellte Vielzellenzyklon kann entweder als ein einziges Modul mit verschiedenen Gruppen von Zyklonzellen hergestellt werden oder die einzelnen Gruppen von Zyklonzellen werden gesondert als Modul hergestellt. Hier wäre beispielsweise eine Teilung des Vielzellenzyklons in Viertelkreise entsprechend der strichpunktierten Linie 38 denkbar. Der Vielzellenzyklon wird mittels Befestigungsschrauben 39a im Gehäuse 22a gehalten.

## Patentansprüche

1. Vielzellenzyklon, enthaltend eine Vielzahl von Zyklonzellen (15, 15a), eine Ansaugseite (14) für das zu reinigende Fluid und eine Ausblasseite (17) für das gereinigte Fluid sowie ein Gehäuse (22, 22a) mit einem Schmutzaustrag (30, 30a) für die aus dem Fluid abgeschiedenen Substanzen, **dadurch gekennzeichnet, dass** die Zyklonzellen (15, 15a) in der Art gruppenweise im Gehäuse angeordnet sind, dass die einzelnen Gruppen mittels Kanalstrukturen (36a) mit dem Schmutzaustrag verbunden sind, wobei die Zyklonzellen einer Gruppe unterschiedliche Abstände zueinander aufweisen und wobei die Kanalstrukturen im Verhältnis zum Abstand der Zyklonzellen einer Gruppe untereinander einen aufgeweiteten Querschnitt zur Durchleitung der abgeschiedenen Substanzen aufweisen.

2. Vielzellenzyklon nach Anspruch 1, **dadurch gekennzeichnet, dass** die Gruppen von Zyklonzellen (15, 15a) derart angeordnet sind, dass sich jeweils benachbarte Zyklonzellen berühren, wodurch geschlossene Kanalstrukturen gebildet sind.

3. Vielzellenzyklon nach Anspruch 1, **dadurch gekennzeichnet, dass** die Gruppen von Zyklonzellen (15, 15a) in einzelnen Modulen (10) zusammengefasst sind, wobei die Module je ein Modulgehäuse (21) aufweisen, welches Sammelräume (18) für die abgeschiedenen Substanzen bildet und wobei die Sammelräume je mindestens eine Öffnung (19) zu den Kanalstrukturen (36a) des Gehäuses (22, 22a) aufweisen.

4. Vielzellenzyklon nach Anspruch 3, **dadurch gekennzeichnet, dass** die Module (10) einzeln in das Gehäuse (22, 22a) einsetzbar sind.

5. Vielzellenzyklon nach einem der vorherigen Ansprüche, **dadurch gekennzeichnet, dass** die Gruppen von Zyklonzellen zentral- oder achsensymmetrisch zueinander angeordnet sind.

6. Vielzellenzyklon nach einem der vorherigen Ansprüche, **dadurch gekennzeichnet, dass** die Kanalstrukturen (36a) einen Ringkanal (27, 27a) umfassen, der alle Gruppen von Zyklonzellen (15, 15a) umringt und mit dem Schmutzaustrag (30, 30a) in Verbindung steht.

7. Vielzellenzyklon nach einem der vorherigen Ansprüche, **dadurch gekennzeichnet, dass** mindestens eine Zyklonzelle einer Gruppe durch ein Blindrohr (37a) ersetzt ist, welches eine Verbindung zwischen der Ansaugung (14) und den Kanalstrukturen (36a) schafft, derart, dass der Strömungswiderstand im Blindrohr (37a) geringer ist, als derjenige der ersetzten Zyklonzelle.

8. Verfahren zur Herstellung einer Gruppe von Zyklonzellen (15, 15a) für einen Vielzellenzyklon, wobei zumindest ein Teil der Bauelemente der Zyklonzellen jeweils in einem Bauteil in Urformtechnik, insbesondere durch Spritzgießen, hergestellt werden, derart, dass dieses Bauteil alle gleichartigen Bauelemente der Gruppe beinhaltet, wobei eines der besagten Bauteile einen die Ansaugung (14) enthaltenden Grundkörper (12) bildet, der die Durchleitung des zu reinigenden Fluides gewährleistet und ein zweites der besagten Bauteile einen die Auslassseite (17) und Mittelrohre (20) zur Trennung des gereinigten Fluides vom abgeschiedenen Substrat enthaltenden Zusatzkörper (13), wobei die Leitschaufeln (16) der Zyklonzellen (15, 15a) hinterschneidungsfrei bezüglich der Durchströmungsrichtung des Grundkörpers (12) in selbigen integriert sind.

9. Verfahren nach Anspruch 8, **dadurch gekennzeichnet, dass** durch das Zusammensetzen von Grundkörper (12) und Zusatzkörper (13) ein Modul (10) entsprechend der Ausgestaltung nach Anspruch 3 gebildet wird, mit einem Modulgehäuse (21), welches eine Öffnung (19) zum Austrag des abgeschiedenen Substrates aufweist.

## Claims

1. Multi-cell cyclone, including a plurality of cyclone cells (15, 15a), an intake side (14) for the fluid to be filtered and a blow-out side (17) for the filtered fluid as well as a housing (22, 22a) with a dirt discharge (30, 30a) for the substances that have been separated from the fluid, **characterised in that** the cyclone cells (15, 15a) are disposed in the housing in a group-like manner such that the individual groups are connected to the dirt discharge by means of duct structures (36a), wherein the cyclone cells of one group are spaced apart by different spacings and wherein the duct structures, in relation to the spacings between the cyclone cells of one group, have a widened cross-section for conveying the substances that have been separated off.

2. Multi-cell cyclone according to claim 1, **characterised in that** the groups of cyclone cells (15, 15a) are disposed in such a manner that respective adjacent cyclone cells contact each other thus forming closed duct structures.

3. Multi-cell cyclone according to claim 1, **characterised in that** the groups of cyclone cells (15, 15a) are combined in individual modules (10), wherein the modules each include a module housing (21), which forms collecting chambers (18) for the substances that have been separated off, and wherein the collecting chambers each have at least one opening (19) to the duct structures (36a) of the housing (22, 22a).

4. Multi-cell cyclone according to claim 3, **characterised in that** the modules 10) are insertable individually into the housing (22, 22a).

5. Multi-cell cyclone according to one of the preceding claims, **characterised in that** the groups of cyclone cells are disposed in a central or axially symmetrical manner one relative to another.

6. Multi-cell cyclone according to one of the preceding claims, **characterised in that** the duct structures (36a) include a ring channel (27, 27a), which surrounds all the groups of cyclone cells (15, 15a) and communicates with the dirt discharge (30, 30a).

7. Multi-cell cyclone according to one of the preceding claims, **characterised in that** at least one cyclone cell of a group is replaced by a blank tube (37a), which creates a connection between the intake (14) and the duct structures (36a) in such a manner that the flow resistance in the blank tube (37a) is less than that of the replaced cyclone cell.

8. Method for producing a group of cyclone cells (15, 15a) for a multi-cell cyclone, wherein at least one part of the structural elements of the cyclone cells is produced in each case in one component by means of primary moulding methods, more especially injection moulding, in such a manner that the said component contains all the homogeneous structural elements of the group, wherein one of the said components forms a basic body (12) that contains the intake (14), the said basic body guaranteeing the conveyance of the fluid to be filtered, and a second of the said components forms an additional body (13) that contains the outlet side (17) and central tubes (20) for separating the filtered fluid from the substrate that has been separated off, wherein the guide vanes (16) of the cyclone cells (15, 15a) are incorporated in the said additional body without any undercuts with reference to the direction of flow of the basic body (12).

9. Method according to claim 8, **characterised in that** by assembling the basic body (12) and the additional body (13) together a module (10) is formed corresponding to the development according to claim 3, the said module having a module housing (21) which includes an opening (19) for discharging the substrate that has been separated off.

## Revendications

1. Séparateur cyclonique comportant de nombreuses cellules cycloniques (15, 15a), un côté aspiration (14) pour le fluide à nettoyer et un côté de refoulement (17) pour le fluide nettoyé ainsi qu'un boîtier (22, 24) muni d'une sortie de saletés (30, 30a) pour les substances séparées du fluide,
**caractérisé en ce que**
les cellules cycloniques (15, 15a) sont installées dans le boîtier par groupes,
les différents groupes sont reliés à la sortie de saletés par des structures de canaux (36a),
les cellules cycloniques d'un groupe sont entre elles à des distances différentes, et
les structures de canaux ont, entre elles, une section élargie pour le passage des substances retenues par rapport à la distance des cellules cycloniques d'un groupe.

2. Séparateur cyclonique selon la revendication 1,
**caractérisé en ce que**
les groupes de cellules cycloniques (15, 15a) sont installés de façon que les cellules cycloniques voisines se touchent pour former des structures fermées de canaux.

3. Séparateur cyclonique selon la revendication 1,
**caractérisé en ce que**
les groupes de cellules cycloniques (15, 15a) sont regroupés dans différents modules (10) et les modules ont chacun un boîtier (21) formant des chambres collectrices (18) pour les substances retenues et les chambres collectrices ont chaque fois au moins une ouverture (19) vers les structures de canal (36a) du boîtier (22, 22a).

4. Séparateur cyclonique selon la revendication 3,
**caractérisé en ce que**
les modules (10) se logent séparément dans le boîtier (22, 22a).

5. Séparateur cyclonique selon l'une des revendications précédentes,
**caractérisé en ce que**
les groupes de cellules cycloniques sont installés les uns par rapport aux autres avec une symétrie centrale ou axiale.

6. Séparateur cyclonique selon l'une des revendications précédentes,
**caractérisé en ce que**
les structures de canaux (36a) comprennent un canal annulaire (27, 27a) qui entoure tous les groupes de cellules cycloniques (15, 15a) et communique avec la sortie de saletés (30, 30a).

7. Séparateur cyclonique selon l'une des revendications précédentes,
**caractérisé en ce qu'**
au moins une cellule cyclonique d'un groupe est remplacée par un tube aveugle (37a) qui réalise la communication entre l'aspiration (14) et les structures de canal (36a) de façon que la perte de charge dans le tube aveugle (37a) soit inférieure à celle de la cellule cyclonique qu'il remplace.

8. Procédé de fabrication d'un groupe de cellules cycloniques (15, 15a) pour un séparateur cyclonique selon lequel au moins une partie des composants des cellules cycloniques est réalisée chaque fois sous la forme d'une pièce par technique de transformation notamment injection de façon que cette pièce comporte tous les composants de même type du groupe,
l'un des composants formant un corps de base (12) avec l'aspiration (14) qui assure le passage du fluide à nettoyer et un second composant comporte un corps auxiliaire (13) avec le côté de sortie (17) et le tube central (20) pour séparer le fluide nettoyé du substrat retenu, des aubes de guidage (16) des cellules cycloniques (15, 15a) étant intégrées sans partie en contre-dépouille vis-à-vis de la direction de passage du fluide dans le corps de base (12).

9. Procédé selon la revendication 8,
**caractérisé en ce que**
par l'assemblage du corps de base (12) et du corps auxiliaire (13) on forme un module (10) selon la réalisation de la revendication 3 avec un boîtier de module (21) comportant une ouverture (19) pour évacuer les produits séparés.
